# EUROPÄISCHE PATENTSCHRIFT

(11) **EP 2 314 143 B1**
(45) Veröffentlichungstag und Bekanntmachung des Hinweises auf die Patenterteilung: **22.04.2015**
(21) Anmeldenummer: 10401178.8
(22) Anmeldetag: 18.10.2010
(51) Int. Cl.: A01C 17/00

(54) **Schleuderstreuer**
Centrifugal spreader
Epandeur centrifuge

(30) Priorität: 22.10.2009 DE 102009044311
(43) Veröffentlichungstag der Anmeldung: 27.04.2011
(73) Patentinhaber: Amazonen-Werke H. Dreyer GmbH & Co. KG, 49205 Hasbergen (DE)
(72) Erfinder: Krabbe, Ulrich, 49205 Hasbergen (DE); Johannaber, Stefan Jan, 49536 Lienen (DE); Wiebusch, Thorsten, 49205 Hasbergen (DE)

(56) Entgegenhaltungen:
- EP-A1- 1 738 632
- EP-A1- 1 902 607

## Beschreibung

Die Erfindung betrifft einen Schleuderstreuer gemäß des Oberbegriffes des Patentanspruches 1.

Ein derartiger Schleuderstreuer ist beispielsweise durch die EP 17 38 632 B2 bekannt. Die als Dosierplatte mit einer Dosieröffnung ausgestaltete Dosiervorrichtung ist verdrehbar am Vorratsbehälter angeordnet. Sie ist am Unterteil des Vorratsbehälters befestigt und weist eine große Auslauföffnung auf. Die Bodenplatte und die Dosierplatte sind flächenartig ausgebildet. Zur Halterung Dosierplatte an dem Unterteil sind oberhalb der Dosierplatte und auf die auf dem Unterteil befestigte Bodenplatte greifende klammerartige Führungsstücke befestigt. Das Problem besteht nun darin, dass zwischen den flächig aneinander anliegenden Dosierplatte und der am Unterteil gefestigten Halteplatte, die hier als Bodenplatte bezeichnet wird, Dünger gelangt. Dies kann zum Verklemmen der zueinander verdrehbaren und flächig aneinander anliegenden Platten führen. Um dieses zu vermeiden, sind in der Dosierplatte Schlitze angeordnet, durch welche der zwischen die Platten geratene Dünger austreten kann. Jedoch sind die Flächen zwischen den Schlitzen relativ groß, so dass dennoch die Gefahr der Verklemmung besteht.

Der Erfindung liegt die Aufgabe zugrunde, eine verbesserte Lagerbefestigung einer eine Dosiervorrichtung aufweisenden Bodenplatte an dem Unterteil des Vorratsbehälters unter Vermeidung, jedoch zumindest erheblicher Minderung der Verklemmungsgefahr durch zwischen die zueinander verdrehbaren Teile gelangenden Düngerpartikel, zu schaffen.

Diese Aufgabe wird erfindungsgemäß dadurch gelöst, dass die Gleitlagerung an dem Unterteil befestigte und die Dosiervorrichtung von unten tragende und auf einem Kreis angeordnete Lagerflächenelemente aufweist, wobei die Lagerflächenelemente jeweils nur eine vergrößerte punktartige, insbesondere abgeflachte halbkugelförmige Auflagefläche aufweisen. Infolge dieser Maßnahmen sind nur sehr kleine Flächen und Bereiche im Bereich der Gleitlagerung vorhanden, zwischen welchen Material gelangen kann. Aufgrund der geringen Ausdehnung und der geringen Anzahl von Lagerflächenelementen ist die Gefahr der Verklemmung durch zwischen die bewegbaren Teile gelangenden Materialpartikel fast völlig ausgeschlossen.

Eine einfache Ausgestaltung der Gleitlagerung lässt sich dadurch erreichen, dass die Dosiervorrichtung zumindest eine Gleitlagerfläche aufweist, und dass die Gleitlagerfläche auf die Lagerflächenelemente aufliegend angeordnet ist.

Eine einfache Ausgestaltung der Gleitlagerfläche, die an der Dosiervorrichtung angeordnet ist, lässt sich dadurch erreichen, dass die Gleitlagerfläche als Kreisring ausgebildet ist.

Eine einfache Befestigung und Anordnung der Gleitlagerfläche an der Dosiervorrichtung lässt sich dadurch erreichen, dass die Gleitlagerfläche in kragenartiger Weise an der Dosiervorrichtung angeordnet ist.

Eine einfache Ausgestaltung der vergrößerten punktartigen Auflagefläche der Gleitlagerung lässt sich dadurch in einfacher Weise verwirklichen, dass die Lagerflächenelemente als Bolzen mit einem als abgeflachte halbkugelförmige und/oder vergrößerte punktartige Auflagefläche dienenden gegenüber dem Bolzen vergrößerten Bolzenkopf ausgebildet sind.

Eine einfache Anordnung der Gleitlagerung am unteren Bereich des Vorratsbehälters lässt sich dadurch verwirklichen, dass die Lagerflächenelemente beabstandet zueinander an einem kreisförmigen Haltering befestigt sind, dass der Haltering mittels Befestigungsmitteln an dem Unterteil befestigt ist.

Um eine sehr gute Leichtgängigkeit der verstellbaren Dosieranordnung zu erreichen ist vorgesehen, dass die Lagerflächenelemente aus einem gute Gleiteigenschaften aufweisenden Material hergestellt sind.

Eine einfache Ausgestaltung der Lagerflächenelemente mit der vergrößerten punktartigen Auflagefläche lässt sich dadurch erreichen, dass der Bolzenkopf halbkugelförmig mit einem abgeflachten Bereich, der die vergrößerte punktartige Auflagefläche bildet, ausgebildet ist.

Eine vorteilhafte Führung der Dosiervorrichtung zum Verdrehen der Dosiervorrichtung gegenüber dem Vorratsbehälter aufgrund der Gleitlagerung lässt sich dadurch erreichen, dass die Gleitlagerfläche aus einem flächenartigen Kreisring, der in kragenartiger Weise an der Dosiervorrichtung angeordnet ist, und einem sich auf der Innen- und/oder Außenseite des Kreisringes im Winkel anschließenden ringartigen Lagerring besteht, dass die Lagerflächenelemente als an dem Kreisring und den Lagerring in anliegender Weise dem Haltering zugeordnet sind.

Eine vorteilhafte Ausgestaltung der Gleitlagerung mit nur wenigen Lagerflächenelementen lässt sich dadurch erreichen, dass die Befestigungsmittel jeweils benachbart zu einem Lagerflächenelement angeordnet sind, dass die Lagerflächenelemente an dem Haltering gegenüber dem Innenrand des Halteringes an zungenartig vorstehenden Bereichen des Halteringes angeordnet sind. Eine vorteilhafte Ausgestaltung der Gleitlagerung mit nur wenigen Auflageflächen lässt sich dadurch verwirklichen, dass nur 4 bis 10, vorzugweise 6 punktartige Auflageflächen verteilt über den Kreisumfang der Gleitlagerung vorgesehen sind.

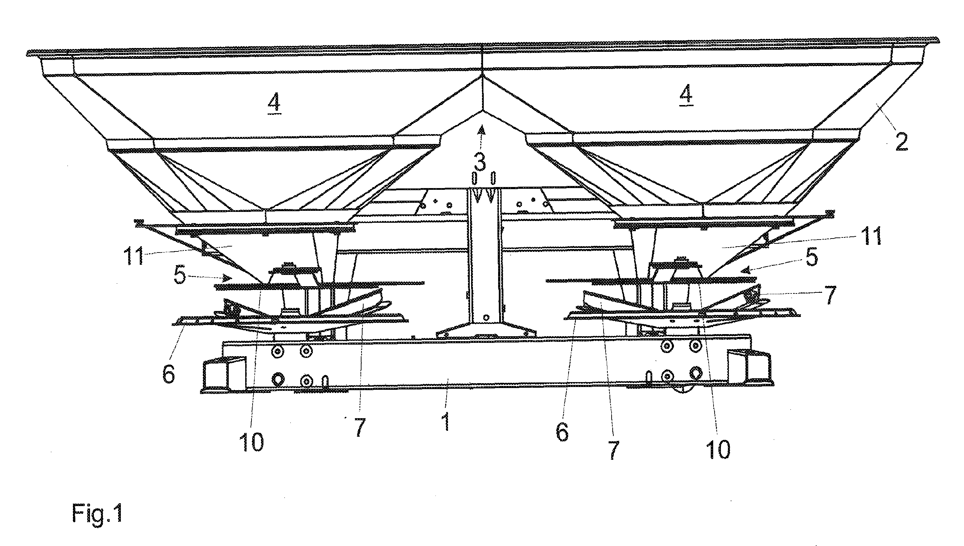

Weitere Einzelheiten der Erfindung sind der Beispielsbeschreibung und den Zeichnungen zu entnehmen. Hierbei zeigen
- Fig. 1: den Schleuderdüngerstreuer in der Ansicht von hinten und in Prinzipdarstellung,
- Fig. 2: die in Fahrtrichtung gesehen linke Dosiervorrichtung mit der Gleitlagerung,
- Fig. 3: die Dosiervorrichtung gemäß Fig. 2 in der Draufsicht,
- Fig. 4: die Dosiervorrichtung im Schnitt IV - IV und
- Fig. 5: die Gleitlagerung der Dosiervorrichtung am Vorratsbehälter im Schnitt gemäß Fig. 4, jedoch in vergrößerter Darstellung und Teilansicht.

Der Schleuderstreuer weist einen Rahmen 1 mit einem Vorratsbehälter 2 auf. Der Vorratsbehälter 2 ist durch ein dachförmiges Mittelteil 3 in zwei Bereiche 4 aufgeteilt, die sich zu einem Trichter verjüngen. Diese trichterförmigen Unterteile 4 ist jeweils mittels einer Dosiervorrichtung 5 abgeschlossen. Über die Dosiervorrichtungen 5 wird das sich im Vorratsbehälter befindliche Material den unterhalb der Dosiervorrichtungen 5 angeordneten und mittels einer Antriebseinrichtung und einer Kraftquelle rotierend angetriebenen Schleuderscheiben 6, auf denen Wurfschaufeln 7 angeordnet sind, zugeführt. Die Wurfschaufeln 7 verteilen das Material in Breitverteilung auf der Bodenoberfläche.

Bei dem Ausführungsbeispiel weist jede Dosiervorrichtung 5 eine in einer Bodenplatte 8 angeordnete Auslauföffnung 9, die über einen zugeordneten Schieber 10 in ihrer Öffnungsweite einzustellen und zu verschließen ist, auf. Die jeweilige Bodenplatte 8 ist an einem kleinen trichterförmigen Auslaufteil 11 angeordnet. Dieses Auslaufteil 11 ist mittels einer Gleitlagerung 12 verdrehbar an dem trichterförmigen Vorratsbehälterbereich 4 um eine aufrechte Achse 13 verdrehbar angeschlossen. Das trichterförmige Auslaufteil 11 der Dosiervorrichtung 5 weist eine als Kreisring 14 ausgebildete Gleitlagerfläche auf, die in kragenartiger Weise an dem Auslaufteil 11 der Dosiervorrichtung 5 angeordnet ist.

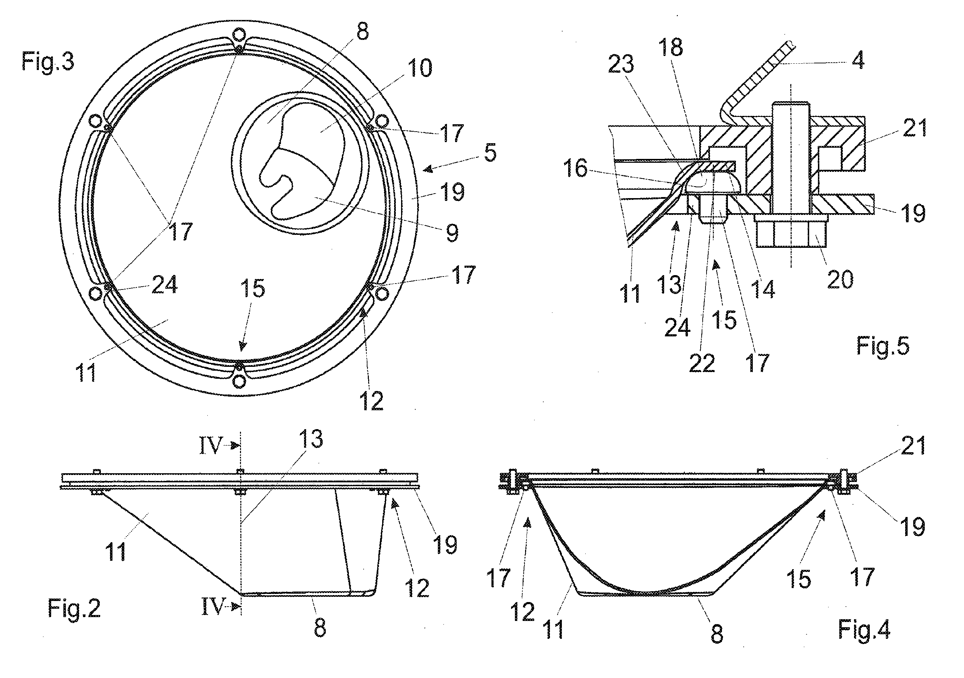

Die als Kreisring 14 ausgebildete Gleitlagerfläche lagert auf an dem Vorratsbehälter 2 angeordneten Lagerflächenelementen 15 auf. Diese Lagerflächenelemente 15 weisen jeweils nur eine vergrößerte, abgeflachte kugel- bzw. halbkugelförmige Auflagefläche 16 auf. Die als Kreisring 14 ausgebildete Gleitlagerfläche ist auf die Lagerflächenelemente 15 aufliegend angeordnet, die die Fig. 4 und 5 zeigen. Die Lagerflächenelemente 15 sind als Bolzen 17 mit einem als abgeflachten kugel- bzw. halbkugelförmige und vergrößerte punktartige Auflagefläche 16 ausgestaltet. Diese Auflagefläche 16 ist gegenüber dem Bolzen 17 als vergrößerter Bolzenkopf 18 ausgebildet, wie die Fig. 5 zeigt. Die Lagerflächenelemente 15 sind beabstandet zueinander an einem kreisförmigen Haltering 19, der mittels Befestigungs- 20 und Abstandselementen 21 an dem unteren Bereich 4 des Vorratsbehälters 2 angeordnet ist, angeordnet. Die Befestigungsmittel 20 hier sind als Schrauben ausgebildet. Die Lagerflächenelemente 15 sind aus einem gute Gleiteigenschaften aufweisenden Material, beispielsweise einem Teflon beigemischten Stahl, hergestellt.

Der Bolzenkopf 18 ist halbkugelförmig mit einem abgeflachten Bereich 22, der die jeweilige vergrößerte punktartige Auflagefläche bildet, ausgebildet, wie Fig. 5 zeigt.

Die Gleitlagerfläche besteht einerseits aus einem flächenartigen Kreisring 19, der wie erwähnt in kragenartiger Weise an der Dosiervorrichtung 5 angeordnet ist. Weiterhin besteht die Gleitlagerfläche aus einem sich auf der Innenseite des als Gleitlagerfläche dienenden Kreisringes 19 im Winkel anschließenden ringartigen Lagerring 23, welcher aus einem in geprägter Weise angeformten Bereich des trichterförmigen Unterteiles 11 der Dosiervorrichtung 5 besteht. Der als Lagerflächenelement 15 dienende Bolzenkopf 18 ist dem Kreisring 19 und dem Lagerring 23 in anliegender Weise zugeordnet, so dass eine gute Drehführung der Dosiervorrichtung 5 erreicht wird.

Die als Bolzen 17 mit Bolzenkopf 18 ausgebildeten Lagerflächenelemente 15 sind beabstandet zueinander angeordnet. Hierbei sind die Befestigungsmittel 20 jeweils benachbart zu einem Lagerflächenelement 15 angeordnet, wie Fig. 3 zeigt. Die als Bolzen 17 ausgebildeten Lagerflächenelemente 15 sind an dem Haltering 19 gegenüber dem Innenrand des Halteringes 19 nach innen an zungenartig vorstehenden Bereichen 24 des Halteringes 19 angeordnet, wie Fig. 3 zeigt.

Aufgrund der geringen Auflagefläche 16 und Ausdehnung der als Bolzenköpfe 18 ausgebildeten Lagerflächenelemente 15 ergibt sich eine sehr leichte Gleitlagerung für die verdrehbare Anordnung der Dosiervorrichtung 5 eines als Schleuderdüngerstreuers ausgebildeten Streuers. Auch kann sich aufgrund der geringen Ausdehnung der Auflagefläche 16 der als Bolzenköpfe 18 ausgebildeten Lagerflächenelemente 15 kein Dünger oder sonstiger, die leichte Gleitlagerung behindernder Fremdkörper, anlagern.

## Patentansprüche

1. Schleuderstreuer mit einem Vorratsbehälter (2), der zumindest ein sich zu einem Trichter verjüngendes Unterteil (4) aufweist,
welches mit einer um eine aufrechte Achse (13) mittels einer Gleitlagerung (12) verdrehbar an dem Unterteil (4) angeordneten Dosiervorrichtung (5) abgeschlossen ist, **dadurch gekennzeichnet,**
**dass** die Gleitlagerung ( 12 ) an dem Unterteil ( 4 ) befestigte und die Dosiervorrichtung ( 5 ) von unten tragende und auf einem Kreis angeordnete Lagerflächenelemente ( 15 ) aufweist, wobei die Lagerflächenelemente ( 15 ) jeweils nur eine vergrößerte punktartige, insbesondere abgeflachte halbkugelförmige Auflagefläche ( 16 ) aufweisen.

2. Schleuderstreuer nach Anspruch 1, **dadurch gekennzeichnet, dass** die Dosiervorrichtung ( 5 ) zumindest eine Gleitlagerfläche ( 14 ) aufweist, und dass die Gleitlagerfläche ( 14 ) auf die Lagerflächenelemente ( 15 ) aufliegend angeordnet ist.

3. Schleuderstreuer nach einem oder mehreren der vorstehenden Ansprüche, **dadurch gekennzeichnet, dass** die Gleitlagerfläche als Kreisring ( 14) ausgebildet ist.

4. Schleuderstreuer nach zumindest einem der vorstehenden Ansprüche, **dadurch gekennzeichnet, dass** die Gleitlagerfläche ( 14 ) in kragenartiger Weise an der Dosiervorrichtung ( 5 ) angeordnet ist.

5. Schleuderstreuer nach zumindest einem der vorstehenden Ansprüche, **dadurch gekennzeichnet, dass** die Lagerflächenelemente ( 15 ) als Bolzen ( 17 ) mit einem als abgeflachte halbkugelförmige und/oder vergrößerte punktartige Auflagefläche ( 16 ) dienenden gegenüber dem Bolzen ( 17 ) vergrößerten Bolzenkopf ( 18 ) ausgebildet sind.

6. Schleuderstreuer nach einem oder mehreren der vorstehenden Ansprüche, **dadurch gekennzeichnet, dass** die Lagerflächenelemente ( 15 ) beabstandet zueinander an einem kreisförmigen Haltering ( 19 ) befestigt sind, dass der Haltering ( 19 ) mittels Befestigungsmitteln ( 20 ) an dem Unterteil ( 4 ) befestigt ist.

7. Schleuderstreuer nach zumindest einem der vorstehenden Ansprüche, **dadurch gekennzeichnet, dass** die Lagerflächenelemente ( 15 ) aus einem gute Gleiteigenschaften aufweisenden Material hergestellt sind.

8. Schleuderstreuer nach Anspruch 5, **dadurch gekennzeichnet, dass** der Bolzenkopf ( 18 ) halbkugelförmig mit einem abgeflachten Bereich ( 22 ), der die vergrößerte punktartige Auflagefläche ( 16 ) bildet, ausgebildet ist.

9. Schleuderstreuer nach zumindest einem der vorstehenden Ansprüche, **dadurch gekennzeichnet, dass** die Gleitlagerfläche aus einem flächenartigen Kreisring ( 14 ), der in kragenartiger Weise an der Dosiervorrichtung ( 5 ) angeordnet ist, und einem sich auf der Innen- und/oder Außenseite des Kreisringes ( 14 ) im Winkel anschließenden ringartigen Lagerring ( 23 ) besteht, dass die Lagerflächenelemente ( 15 ) als an dem Kreisring ( 14 ) und den Lagerring ( 23 ) in anliegender Weise dem Haltering ( 19 ) zugeordnet sind.

10. Schleuderstreuer nach zumindest einem der vorstehenden Ansprüche, **dadurch gekennzeichnet, dass** die Befestigungsmittel ( 20 ) jeweils benachbart zu einem Lagerflächenelement ( 15 ) angeordnet sind, dass die Lagerflächenelemente ( 15 ) an dem Haltering ( 19 ) gegenüber dem Innenrand des Halteringes ( 19 ) an zungenartig vorstehenden Bereichen ( 24 ) des Halteringes ( 19 ) angeordnet sind.

## Claims

1. Centrifugal spreader with a storage container (2) which has at least one lower part (4) which tapers to form a hopper and is closed off by a metering device (5) which is arranged on the lower part (4) so as to be rotatable about a vertical axis (13) by means of a plain bearing (12), **characterized in that** the plain bearing (12) has bearing surface elements (15) which are fastened to the lower part (4) and support the metering device (5) from below and are arranged on a circle, wherein the bearing surface elements (15) each have just one enlarged, spot-like, in particular flattened, hemispherical support surface (16).

2. Centrifugal spreader according to Claim 1, **characterized in that** the metering device (5) has at least one plain bearing surface (14), and **in that** the plain bearing surface (14) is arranged resting on the bearing surface elements (15).

3. Centrifugal spreader according to one or more of the preceding claims, **characterized in that** the plain bearing surface is embodied as a circular ring (14).

4. Centrifugal spreader according to at least one of the preceding claims, **characterized in that** the plain bearing surface (14) is arranged on the metering device (5) in a collar-like manner.

5. Centrifugal spreader according to at least one of the preceding claims, **characterized in that** the bearing surface elements (15) are embodied as bolts (17) with a bolt head (18) which serves as the flattened, hemispherical and/or enlarged, spot-like support surface (16) and is enlarged in relation to the bolt (17).

6. Centrifugal spreader according to one or more of the preceding claims, **characterized in that** the bearing surface elements (15) are fastened spaced apart from one another to a circular retaining ring (19), **in that** the retaining ring (19) is fastened to the lower part (4) by means of fastening means (20).

7. Centrifugal spreader according to at least one of the preceding claims, **characterized in that** the bearing surface elements (15) are produced from a material having good sliding properties.

8. Centrifugal spreader according to Claim 5, **characterized in that** the bolt head (18) is of hemispherical design with a flattened region (22) which forms the enlarged, spot-like support surface (16).

9. Centrifugal spreader according to at least one of the preceding claims, **characterized in that** the plain bearing surface consists of a sheet-like circular ring (14), which is arranged on the metering device (5) in a collar-like manner, and of a ring-like bearing ring (23) adjoining the inner side and/or outer side of the circular ring (14) at an angle, **in that** the bearing surface elements (15) are assigned to the retaining ring (19) in a manner abutting against the circular ring (14) and the bearing ring (23).

10. Centrifugal spreader according to at least one of the preceding claims, **characterized in that** the fastening means (20) are in each case arranged adjacent to a bearing surface element (15), **in that** the bearing surface elements (15) are arranged on the retaining ring (19) on regions (24) of the retaining ring (19) which protrude in the manner of a tongue in relation to the inner edge of the retaining ring (19).

## Revendications

1. Épandeur centrifuge comprenant un réservoir (2) qui comprend au moins une partie inférieure (4) se rétrécissant de manière à former un entonnoir, laquelle est fermée par un dispositif de dosage (5) disposé sur la partie inférieure (4) de manière à pouvoir tourner autour d'un axe vertical (13) au moyen d'un palier lisse (12), **caractérisé en ce que** le palier lisse (12) comprend des éléments de surface de palier (15) fixés à la partie inférieure (4), supportant le dispositif de dosage (5) par le dessous et disposés sur un cercle, les éléments de surface de palier (15) ne comprenant respectivement qu'une surface d'appui (16) agrandie ponctuelle, en particulier aplatie hémisphérique.

2. Épandeur centrifuge selon la revendication 1, **caractérisé en ce que** le dispositif de dosage (5) comprend au moins une surface de palier lisse (14), et **en ce que** la surface de palier lisse (14) est disposée de manière à reposer sur les éléments de surface de palier (15).

3. Épandeur centrifuge selon l'une quelconque ou plusieurs des revendications précédentes, **caractérisé en ce que** la surface de palier lisse est réalisée sous forme de bague circulaire (14).

4. Épandeur centrifuge selon au moins l'une quelconque des revendications précédentes, **caractérisé en ce que** la surface de palier lisse (14) est disposée en forme de collerette sur le dispositif de dosage (5).

5. Épandeur centrifuge selon au moins l'une quelconque des revendications précédentes, **caractérisé en ce que** les éléments de surface de palier (15) sont réalisés sous forme de boulons (17) dotés d'une tête de boulon (18) agrandie par rapport au boulon (17) et servant de surface d'appui (16) aplatie hémisphérique et/ou agrandie ponctuelle.

6. Épandeur centrifuge selon l'une quelconque ou plusieurs des revendications précédentes, **caractérisé en ce que** les éléments de surface de palier (15) sont fixés de manière espacée les uns des autres sur une bague de retenue circulaire (19), et **en ce que** la bague de retenue (19) est fixée à la partie inférieure (4) par le biais de moyens de fixation (20).

7. Épandeur centrifuge selon au moins l'une quelconque des revendications précédentes, **caractérisé en ce que** les éléments de surface de palier (15) sont fabriqués à partir d'un matériau présentant de bonnes propriétés de glissement.

8. Épandeur centrifuge selon la revendication 5, **caractérisé en ce que** la tête de boulon (18) est réalisée de manière hémisphérique avec une région aplatie (22) qui forme la surface d'appui (16) agrandie ponctuelle.

9. Épandeur centrifuge selon au moins l'une quelconque des revendications précédentes, **caractérisé en ce que** la surface de palier lisse est constituée d'une bague circulaire (14) de type surface, qui est disposée en forme de collerette sur le dispositif de dosage (5), et d'une bague de palier (23) annulaire se raccordant suivant un angle sur le côté intérieur et/ou extérieur de la bague circulaire (14), et **en ce que** les éléments de surface de palier (15) sont associés à la bague de retenue (19) de manière à s'appliquer contre la bague circulaire (14) et la bague de palier (23).

10. Épandeur centrifuge selon au moins l'une quelconque des revendications précédentes, **caractérisé en ce que** les moyens de fixation (20) sont disposés de manière respectivement adjacente à un élément de surface de palier (15), et **en ce que** les éléments de surface de palier (15) sont disposés sur la bague de retenue (19) en regard du bord intérieur de la bague de retenue (19) sur des régions (24) faisant saillie à la manière de languettes de la bague de retenue (19).
